# EUROPÄISCHE PATENTSCHRIFT

(11) **EP 2 584 418 B1**
(45) Veröffentlichungstag und Bekanntmachung des Hinweises auf die Patenterteilung: **18.06.2014**
(21) Anmeldenummer: 11186117.5
(22) Anmeldetag: 21.10.2011
(51) Int. Cl.: G05B 19/401

(54) **Verfahren und Vorrichtung zur Ortung eines Aufnahmepunktes eines Objekts in einer Anlage**
Method and device for locating a grasping point of an object in an assembly
Procédé et dispositif de localisation d'un point de préhension d'un objet dans une installation

(43) Veröffentlichungstag der Anmeldung: 24.04.2013
(73) Patentinhaber: Siemens Aktiengesellschaft, 80333 München (DE)
(72) Erfinder: Brett, Wolfgang, 77694 Kehl (DE); Bürkle, Eric, 77746 Schutterwald (DE)

(56) Entgegenhaltungen:
- EP-A2- 1 519 372
- DE-A1- 3 302 177
- DE-U1-212009 000 055

## Beschreibung

In technischen Anlagen stellt sich oft die Aufgabe, dass ein in der Anlage ruhendes Objekt von einem Transportmittel aufzunehmen ist. Hierfür verfügt das Objekt über einen - oder in der Regel auch mehrere - Aufnahmepunkte, an welchem das Transportmittel das Objekt aufnehmen kann. Insbesondere wenn diese Aufnahme automatisch erfolgen soll, muss die genaue Raumlage des Aufnahmepunktes ermittelt werden.

Im Folgenden sei als Beispiel für eine Anlage eine EAF-Anlage (Electric Arc Furnace - Elektrolichtbogenofen) genannt. Das Objekt ist dann ein mit einzuschmelzendem Stahlschrott befüllbarer Schrottkorb, der z.B. auf einer Schrottfähre, z.B. einem Schienenfahrzeug, oder einem anderen Übergabepunkt ruht. Das Transportmittel ist ein Chargierkran. Die Aufnahmepunkte sind dann Transportzapfen am Schrottkorb, an welchen der Chargierkran mit entsprechenden Transporthaken als Aufnahmemittel angreift, um den Schrottkorb zu heben und zu transportieren.

Die Aufnahme des Schrottkorbes von einer Schrottfähre oder einem anderen Übergabepunkt durch den Chargierkran ist ein Schritt des Chargiervorgangs. Bekannt ist es, diesen Vorgang von einem Kranführer manuell und ohne Automation bzw. Messtechnik durchzuführen. Dies geschieht mittels einer Fernsteuerung, d.h. mittels einer Fernbedienung vom Anlagenboden oder per Pultbedienung von der Ofenwarte oder mobil von einer Krankabine aus. Die Bedienung erfolgt auf dabei stets auf Sicht durch den Kranführer, z.B. durch direkte optische Kontrolle oder kamerabasiert durch Betrachtung eines Live-Videobildes. Eine Positionsbestimmung des Schrottkorbes bzw. dessen Aufnahmepunktes ist hier nicht notwendig.

Wünschenswert wäre nun eine automatische Schrottchargierung in einem Elektrolichtbogenofen. Hierbei ist unter anderem die automatisierte Schrottkorbaufnahme durch den Chargierkran, der automatische Schrottkorbtransport mittels des Chargierkrans zum Elektrolichtbogenofen, die automatische Chargierung in das Ofengefäß sowie der automatisierte Rücktransport des Schrottkorbes zur Schottfähre oder einem anderen Übergabepunkt angedacht. Die vorliegende Erfindung befasst sich hierbei lediglich mit einem Teilproblem dieses Gebietes, nämlich der Bestimmung der tatsächlichen Raumlage des Aufnahmepunktes des Schrottkorbes. Die ermittelte Raumlage kann dann beispielsweise der Steuerung des Chargierkrans zugeführt werden, der dann die entsprechende Position automatisch anfahren kann, um den Schrottkorb zielgenau aufzunehmen.

Lösbar wäre die Aufgabe beispielweise durch einen 3D-Laserscan oder eine Live-Kameraüberwachung der Anlage oder eine Kombination beider Methoden. Ein solches System müsste in der Anlage installiert werden, um z.B. in einem anlagenfesten Koordinatensystem die tatsächliche Lage des Aufnahmepunktes zu ermitteln. Hierzu sind aufwändige Hardware und Messungen (3D-Laserscanner) oder eine aufwändige Bildauswertung mit teurer Spezialhardware (Kamerabildauswertung) notwendig. Eine derartige Lösung wäre daher aufwändig und teuer.

Aus der EP 1519372 A2 und der DE 21 2009 00 055 Ul sind Verfahren zur Positionsbestimmung bekannt, welche ebenfalls aufwändige Lösungen darstellen.

Die Erfindung geht von folgenden Voraussetzungen aus: Im bzw. zumindest kurz vor dem Zeitpunkt der Aufnahme des Objekts durch das Transportmittel ruht das Objekt in der Anlage. In der Anlage ist für das Objekt eine Soll-Lage vorgegeben. Z.B. liegt eine einen Schrottkorb tragende, schienengeführte Fähre an einem ortsfest an bekannter Position installiertem Stoßpuffer des Schienensystems an. Die Geometrie der Fähre und des Schrottkorbes ist bekannt und somit die Lage der Aufnahmepunkte. Würde sich das Objekt exakt in der Soll-Lage befinden, wäre also die Raumlage der Aufnahmepunkte in der Anlage direkt bekannt. Durch verschiedene Umstände ruht das Objekt in der Praxis jedoch nicht exakt in der Soll-Lage, sondern in einer von dieser in gewissen Grenzen abweichenden Toleranzlage. Z.B. ist der Schrottkorb durch unterliegenden Schrott ein paar Zentimeter angehoben und die Schrottfähre um ein paar Zentimeter entlang der Schienen verschoben. Diese tatsächliche Toleranzlage soll hier möglichst exakt ermittelt werden.

Aufgabe der vorliegenden Erfindung ist es, ein verbessertes Verfahren und eine Vorrichtung zur Ermittlung der Toleranzlage des Aufnahmepunktes des Objekts anzugeben.

Die Aufgabe wird hinsichtlich des Verfahrens gelöst durch ein Verfahren gemäß Patentanspruch 1 zur Ermittlung einer Toleranzlage eines Aufnahmepunktes eines Objekts. Das Objekt ruht in einer Anlage und ist am Aufnahmepunkt von einem Transportmittel aufzunehmen. Für die Toleranzlage existiert eine bekannte Soll-Lage. In der Regel weicht die Toleranzlage von der Soll-Lage ab.

Erfindungsgemäß wird am Objekt eine Kennmarke angebracht. Die Relativposition der Kennmarke zum Aufnahmepunkt - und in der Regel auch zum Objekt an sich - ist dabei bekannt. Eine Recheneinrichtung ermittelt anschließend anhand einer in der Anlage angeordneten Ortungsvorrichtung eine Raumlage der Kennmarke in der Anlage, also in einem in der Anlage ortsfesten Anlagenkoordinatensystem. Aus der ermittelten Raumlage und der bekannten Relativposition ermittelt die Recheneinrichtung anschließend die Toleranzlage, d.h. die tatsächliche Ortsposition des Aufnahmepunktes in der Anlage bzw. dem Anlagenkoordinatensystem.

Die tatsächliche Toleranzlage des Aufnahmepunktes kann anschließend beispielsweise an eine sich ebenfalls am Anlagenkoordinatensystem orientierende Automatiksteuerung des Transportmittels übermittelt werden, damit dieses den Aufnahmepunkt geeignet anfahren und das Objekt am Aufnahmepunkt mit seinem Aufnahmemittel möglichst ortsgenau aufnehmen kann.

Erfindungsgemäß wird also durch eine Ortungsvorrichtung nicht der Aufnahmepunkt selbst direkt geortet, sondern die Kennmarke. Im Gegensatz zum Aufnahmepunkt, der unter Umständen schwer zu orten ist, kann die Kennmarke beliebig gestaltet werden. Insbesondere können Ortungsvorrichtung und Kennmarke als System besonders günstig gestaltet werden, um eine Ortung exakt und einfach möglich zu machen. Beispielsweise ist ein zylindrischer, metallischer, oft grob verschmutzter Aufnahmezapfen eines Schrottkorbes als Aufnahmepunkt, schwerer durch eine Ortungsvorrichtung zu orten als eine klar definierte, saubere und speziell zu diesem Zweck entworfene und auf die Ortungsvorrichtung abgestimmte Kennmarke. Die Erfindung verursacht zunächst einen scheinbaren Mehraufwand, nämlich durch die zusätzliche Installation bzw. dem Ortungsumweg über die Kennmarke. Durch die wesentlich vereinfachte und exakt mögliche Ortung der Kennmarke wird jedoch insgesamt ein Vorteil erzielt, da insbesondere eine wesentlich einfachere und kostengünstigere Ortungsvorrichtung verwendet werden kann.

Erfindungsgemäß misst die Ortungsvorrichtung einen Abstand zwischen sich und der Kennmarke. Die Recheneinrichtung ermittelt die Raumlage der Kennmarke dann anhand des Abstandes. Abstandsmessungen sind im Vergleich zu einer beispielsweise digitalen Bildverarbeitung eines Kamerabildes besonders einfach zu bewerkstelligen. In der Regel reichen einfache arithmetische Operationen nach dem Strahlensatz o.ä. aus. So ist nur eine einfache und relativ leistungsschwache Recheneinrichtung nötig.

Die Ortungsvorrichtung bedient sich ausschließlich einer Abstandsmessung, d.h. es werden neben den Abstandsmessungen keine sonstigen Messungen durchgeführt. Dabei erfolgt eine reine eindimensionale Abstandsmessung von Punkt zu Punkt. Insbesondere wird hier also kein 3D-Abstandsscan durchgeführt.

Bei einer reinen Punkt zu Punkt-Abstandsmessung ergeben sich keine Distanzprobleme wie z.B. beim genannten 3D-Scanner. Letzterer weist einen Öffnungswinkel seines Scankegels auf und ist nur in schmalen Abstandsgrenzen einsetzbar. Ein Objekt im doppelten Abstand zu einem ersten Objekt kann hier in der Regel nur unter Schwierigkeiten detektiert werden. Bei einer reinen Abstandsmessung ist die Messung vielfacher Abstände ohne Schwierigkeiten in der Regel einfach und hochexakt möglich.

In besonders bevorzugter Weise kann bei einem auf dem Anlagenboden ruhenden Objekt die Abstandsmessung außerdem entlang einer Richtung parallel zum Anlagenboden, also z.B. in der Regel waagerecht erfolgen. Die Abstandsmessung kann so z.B. nicht durch einen, in der Regel von oben her arbeitenden Kran als Transportmittel gestört werden. Durch eine dann bodennahe Installation der Ortungseinrichtung und der Kennmarke ist außerdem eine einfache Wartung der Anlage möglich.

Erfindungsgemäß wird eine mit einem Konturverlauf versehene Kennmarke verwendet. Die Kennmarke ist also nicht eben, sondern weist ein Höhenprofil auf. Die Kennmarke wird so am Objekt angebracht, dass der Konturverlauf in jeder Toleranzlage von der Ortungseinrichtung in Form verschiedener gemessener Abstände an verschiedenen Stellen der Kennmarke erfassbar ist. Der Konturverlauf ist also bei einem tatsächlich in der Soll-Lage ruhenden Objekt in Richtung des zu messenden Abstandes ausgerichtet. So wird erreicht, dass verschiedene Bereiche der Kennmarke größtmögliche Unterschiede bezüglich ihrer jeweiligen Abstände zur Ortungsvorrichtung hin aufweisen. Abstandsmessungen zwischen der Ortungsvorrichtung und verschiedenen Punkten der Kennmarke führen so zu verschiedenen Abständen bzw. deren größtmöglichen Differenzen. Sukzessive Abstandsmessungen zu verschiedenen Orten der Kennmarke ergeben dann ein Abstands- bzw. Höhenprofil als Messungsergebnis, d.h. einen zeit- bzw. ortsveränderlichen Abstandsverlauf, der durch die Recheneinrichtung ausgewertet werden kann.

Die Raumlage der Kennmarke wird also anhand einer zur Ortungsvorrichtung hin höhenstrukturierten Kennmarke ermittelt. Wenn die entsprechende Ausrichtung in der Soll-Lage des ruhenden Objektes gegeben ist, so ist zumindest eine etwaige derartige Ausrichtung auch in den Toleranzlagen gegeben, da diese von der Soll-Lage in der Regel nur geringfügig abweichen. Die prinzipielle Ausrichtung der Kennmarke entspricht somit der in der Soll-Lage. Aus den sich ergebenden Abweichungen, welche über Abstandsmessungen erfassbar sind, kann jedoch dann eben die genaue Toleranzlage erfasst werden.

In einer weiteren bevorzugten Ausführungsform des Verfahrens enthält die Ortungsvorrichtung eine Erfassungseinheit, die zur eigentlichen Abstandsmessung dient, und die relativ zum ruhenden Objekt bewegt wird. Die Erfassungseinheit wird daher auch relativ zur ruhenden Kennmarke bewegt. Die Ortungsvorrichtung ermittelt daher ein zeit- bzw. ortsabhängiges Abstandsprofil bzw. Höhenprofil bei Überstreichen der Kennmarke. Die Abstandsmessung kann dabei stets in derselben Relativrichtung von der Erfassungseinheit erfolgen. Das Überstreichen der Kennmarke ergibt sich dann alleine aus der Be-wegung der Erfassungseinheit. Insbesondere ist ein entsprechend beweglicher Abstandsmesser preisgünstiger als ein oben genannter 3D-Scanner, der von einem festen Ort aus Abstände in verschiedene Richtungen misst.

Die Ortungsvorrichtung enthält neben der Erfassungseinheit dann in der Regel ein diese tragendes Grundgerüst, welches wiederum ortsfest in der Anlage installiert ist. Trotz der bewegten Erfassungseinheit befindet sich die Ortungsvorrichtung dann trotzdem nur an einem einzigen Ort in der Anlage.

In einer besonders bevorzugten Variante dieser Ausführungsform wird die Erfassungseinheit entlang einer Geraden bewegt. Erfolgt die Abstandsmessung dann von der Erfassungseinheit aus gesehen immer in dieselbe relative Richtung, z.B. senkrecht zur Geraden, überstreicht auch der Messpunkt insbesondere an der Kennmarke eine in einer Ebene der Messrichtungen liegende Linie.

In einer bevorzugten Variante dieser Ausführungsform und insbesondere bei einem auf dem Anlagenboden ruhenden Objekt kann die Bewegungsgerade der Erfassungseinheit dann wiederum parallel zum Boden, also in der Regel horizontal verlaufen. In einer besonders bevorzugten Ausführungsform des Verfahrens wird der Abstand entlang einer zur Bewegungsgeraden der Erfassungseinheit senkrechten Richtung gemessen. Diese Richtung verläuft dann z.B. ebenfalls waagerecht. Auch hier gelten die o.g. Vorteile.

In einer bevorzugten Ausführungsform des Verfahrens wird eine Kennmarke verwendet, welche eine ebene Grundfläche - in der Regel mit einem aus der Ebene hervortretenden Konturverlauf bildenden Strukturelementen - aufweist. Die Kennmarke wird dann so am Objekt angebracht, dass bei einem in der Soll-Lage ruhenden Objekt die Grundfläche parallel zur Bewegungsgeraden der Erfassungseinheit ausgerichtet ist. Wird die Erfassungseinheit dann entlang der Geraden bewegt, und erfolgt die Abstandsmessung senkrecht zur Geraden, so ergeben sich für Messorte auf der Grundfläche der Kennmarke stets konstante Abstandswerte. Insbesondere folgt dann aus unterschiedlichen gemessenen Abständen an verschiedenen Orten der Grundfläche eine von der Soll-Lage abweichende Toleranzlage, z.B. eine Verdrehung der Kennmarke und damit des gesamten Objekts zur Geraden. Dies kann so besonders leicht ermittelt werden.

Hinsichtlich der Vorrichtung wird die Aufgabe der Erfindung gelöst durch eine Vorrichtung gemäß Patentanspruch 6. Diese enthält eine am Objekt in einer bekannten Relativposition zum Aufnahmepunkt anbringbare Kennmarke, eine anhand einer in der Anlage angeordneten Ortungsvorrichtung eine Raumlage der Kennmarke in der Anlage und die Toleranzlage aus der Raumlage und der Relativposition ermittelnde Recheneinrichtung. Die Vorrichtung wurde zusammen mit ihren Vorteilen bereits im Zusammenhang mit dem oben genannten Verfahren erläutert. Erfindungsgemäß enthält die Ortungsvorrichtung ein Distanzmessgerät als - zumindest Teil der - Erfassungseinheit, welches einen Abstand zwischen sich und der Kennmarke ermittelt. Das Distanzmessgerät ist in einer besonders bevorzugten Ausführungsform ein Laserdistanzmessgerät. Insbesondere stellt das Distanzmessgerät einen Teil der o.g. Erfassungseinheit dar. Es arbeitet als Punkt zu Punkt-Messgerät und misst so den Abstand entlang einer linienhaften Messrichtung.

Die Kennmarke kann den o.g. Konturverlauf aufweisen, der dann anhand der Abstandsmessung erfassbar ist.

In einer besonders bevorzugten Ausführungsform ist der Konturverlauf der Kennmarke durch eine Grundfläche und mindestens ein zu dieser konturiertes Strukturelement gebildet. Das Strukturelement ist beispielsweise eine von der Grundfläche hervortretender Quader, der dann an seinen Rändern Kanten bildet. Diese spiegeln sich bei einer Abstandsmessung dann als Abstandssprung wieder. Z.B. weist ein bei einer fortlaufenden Abstandsmessung überstrichener Steg als Strukturelement zwei im gemessenen Höhenprofil erkennbare Kanten als Abstandssprünge auf.

Die Grundfläche der Kennmarke ist insbesondere wie oben erläutert eben, zumindest in dem Bereich der Kennmarke, in dem Abstandsmessungen für alle zulässigen Toleranzlagen durchzuführen bzw. zu erwarten sind.

In einer besonders bevorzugten Ausführungsform weist zumindest ein Bereich der Kennmarke einen Konturverlauf auf, der in Bezug auf verschiedene Toleranzlagen und in Bezug auf die zu messenden Abstände konstant ist. Mit anderen Worten ist der entsprechende Bereich der Kennmarke so gestaltet, dass für verschiedene Toleranzlagen jeweils gleiche Höhen- bzw. Abstandsprofile gemessen werden. Derartige Konturverläufe dienen beispielsweise zur Kennzeichnung eines Objekttyps, welcher unabhängig von der Toleranzlage jeweils gleich erfasst werden soll. So ergeben sich beispielsweise in bei verschiedenen Toleranzlagen ermittelten Höhenprofilen gleiche oder ähnliche Charakteristika in den entsprechenden Profilen. Die Strukturelemente sind mit anderen Worten dann in Abhängigkeit eines Objekttyps gewählt. Die Unterschiede sind hierbei durch die Ortungsvorrichtung unabhängig von den Toleranzlagen erfassbar. Beispielsweise können so verschiedene Objekttypen unterschieden werden, die verschiedene bekannte Relativlagen der Kennmarken zu den Aufnahmepunkten aufweisen.

Derartige Messprofile können auch als Referenzprofile dienen, um die Ortungsvorrichtung für die jeweilige Messung zu normieren.

Alternativ oder zusätzlich weist ein Bereich der Kennmarke einen in Bezug auf verschiedene Toleranzlagen unterschiedlichen Konturverlauf auf. Nicht die Kennmarke selbst bzw. deren eigentliche Höhenstruktur ist hierbei veränderlich gestaltet, sondern die Höhenstruktur ist derart gestaltet, dass sich verschiedene Höhenprofile in Richtung des zu messenden Abstandes ergeben. Mit anderen Worten ist die Kennmarke dann derart gestaltet, dass für verschiedene Toleranzlagen veränderte Höhenprofil gemessen werden. Die gemessenen Höhenprofile sind also abhängig von der Toleranzlage. Dadurch ist eine Ermittlung der Toleranzlage aus der Abstandsmessung eindeutig möglich. Z.B. wird bei unterschiedlichen Toleranzlagen die Kennmarke an verschiedenen Linienverläufen von der Abstandsmessrichtung überstrichen. Die Konturverläufe sind dann im Bereich der Linienverläufe jeweils unterschiedlich.

In einer besonders bevorzugten Ausführungsform der Erfindung ist die Recheneinrichtung eine speicherprogrammierbare Steuerung. In besonders bevorzugter Weise ist sie Teil der ohnehin vorhandenen Anlagensteuerung. Die oben genannten Abstandsmessungen sind in Vergleich zu einer Bildauswertung eines Kamerabildes mathematisch einfache Operationen, die leicht durch eine speicherprogrammierbare Steuerung (SPS) ausgeführt werden können. Es entfällt somit der Aufwand, zusätzlicher leistungsfähigerer Hardware in der Anlage. Die automatische Positionserkennung des Aufnahmepunktes kann durch die bisherige Anlagensteuerung in einfacher und kostengünstiger Weise mit übernommen werden.

Gemäß der Erfindung wird also eine Kennmarke zusammen mit der Ortungsvorrichtung als Kodiersystem zur Ermittlung der Toleranzlage genutzt. Insbesondere anhand einer zweidimensionalen Messung (Punkt-zu-Punkt Messung an verschiedenen Orten) und einfachster mathematischer Operationen ist die Ermittlung der Raumkoordinaten des Objekts sowie einer etwaigen Verdrehung und des Objekttyps möglich. Die Ortungsvorrichtung kann als einfache Vorrichtung, z.B. von einem Linearantrieb angetriebenes Laserdistanzmessgerät, ausgeführt werden, welches die Kodierung am Objekt erfasst. Eine einfache SPS-Auswertung ist möglich.

Die Erfindung ermöglicht sowohl die Einbindung der automatischen Objektaufnahme in eine vollautomatisierte Anlage, z.B. ein vollautomatisiertes Stahlwerk; außerdem eine schnelle und sichere Aufnahme des Objekts durch das Transportmittel, sowie eine Einsparung von Betriebskosten, insbesondere die Einsparung einer Person zur Bedienung des Transportmittels. Die Aufnahme des Objekts durch das Transportmittel erfolgt Messwert- und mathematisch basiert ohne menschliche Eingriffe und wird daher reproduzierbar.

Das Verfahren und die Vorrichtung kann für die verschiedensten Anlagen und aufzunehmenden Objekten verwendet werden. Die Auswertemöglichkeit in einer einfachen SPS erspart die Koordination mit Fremdfirmen sowie die Anschaffung einer PC-Einheit mit Software und deren Einbindung in ein Netzwerk. Die beschriebene Erfindung ist kostengünstiger als beispielsweise die oben genannten Systeme mit Videokamera, Laserscanner oder Kombinationen hiervon.

Für eine weitere Beschreibung der Erfindung wird auf die Ausführungsbeispiele der Zeichnungen verwiesen. Es zeigen, jeweils in einer schematischen Prinzipskizze:
FIG 1 einen Überblick über das Verfahren,
FIG 2 eine Anlage in Seitenansicht,
FIG 3 die Anlage aus FIG 2 in Draufsicht,
FIG 4 eine Kennmarke in Seitenansicht,
FIG 5 die Kennmarke aus FIG 4 in anderer Seitenansicht,
FIG 6 die Kennmarke aus FIG 4 in der Anlage in Draufsicht,
FIG 7 ein an der Kennmarke gemessenes Höhenprofil.

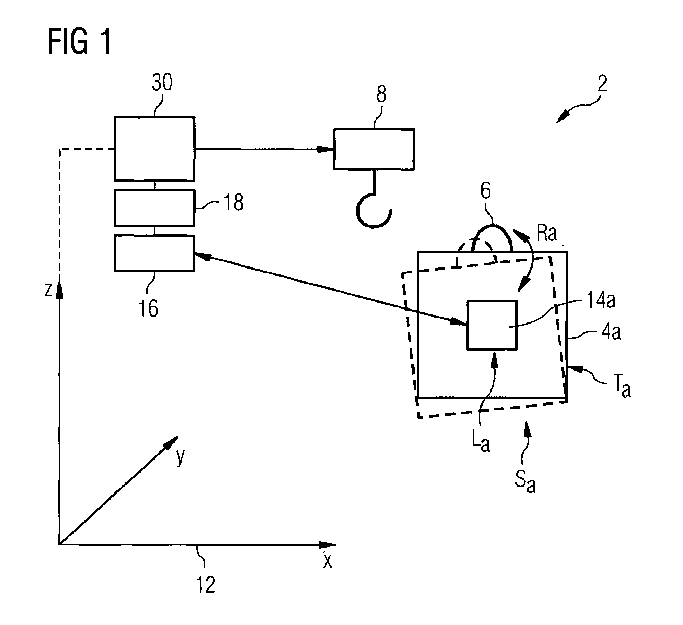

FIG 1 zeigt symbolisch eine Anlage 2 mit einem Objekt 4a, das einen Aufnahmepunkt 6 aufweist. An diesem ist es durch ein Transportmittel 8 aufzunehmen. In der Anlage 2 existiert ein anlagenfestes Anlagenkoordinatensystem 12. Das Objekt 4a und damit dessen Aufnahmepunkt sollte sich idealerweise in einer Soll-Lage Sa befinden. Tatsächlich befindet es sich jedoch in einer - in der Regel hiervon abweichenden - Toleranzlage Ta. Damit das Transportmittel 8 den Aufnahmepunkt 6 gemäß einer sich am Anlagenkoordinatensystem 12 orientierenden Steuerungseinheit 30 exakt anfahren kann, muss die Toleranzlage Ta exakt ermittelt werden.

Am Objekt wird eine Kennmarke 14a angebracht, die sich somit in einer bekannten Relativposition R zum Aufnahmepunkt 6 befindet. Eine mit der Steuerungseinheit 30 verbundene Recheneinrichtung 18 kommuniziert mit einer Ortungseinrichtung 16. Anhand dieser ermittelt sie eine Raumlage La der Kennmarke 14a im Anlagenkoordinatensystem 12 und damit in der Anlage 2. Anhand der Raumlage La und der Relativlage R ermittelt sie dann die Toleranzlage Ta des Aufnahmepunktes 6 und in der Regel auch des gesamten Objekts 4a. Denkbar ist es alternativ auch, die Relativlage R zwischen Kennmarke 14a und Objekt 4a zu kennen und zunächst die Toleranzlage des Objekts 4a selbst und daraus die Toleranzlage des am Objekt 4a in wiederum bekannter Relativposition befindlichen Aufnahmepunktes 6 zu ermitteln.

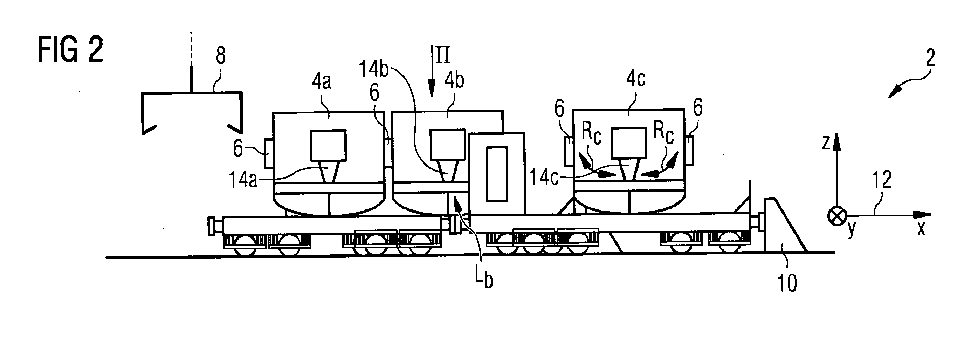

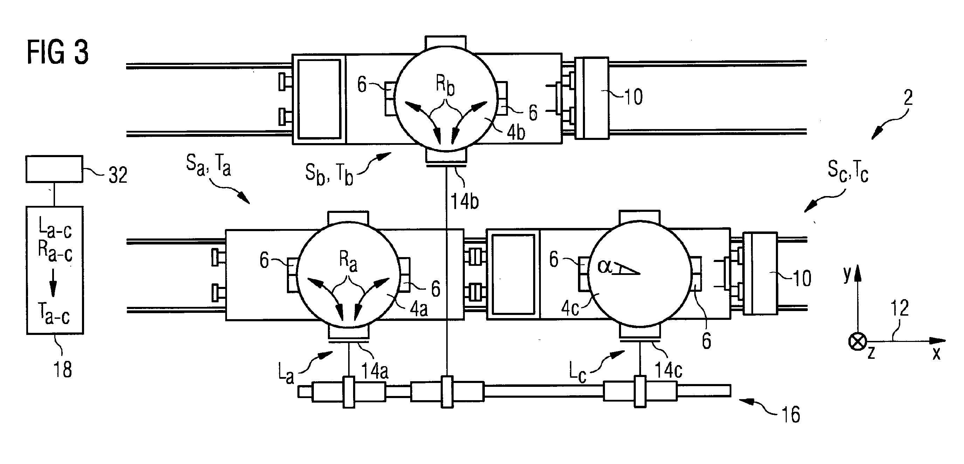

FIG 2 zeigt einen realistischeren Ausschnitt aus einer Anlage 2, im Beispiel einer EAF-Anlage mit drei Objekten 4a-c, im Beispiel Schrottkörben. Jedes der Objekte 4a-c verfügt über jeweilige Aufnahmepunkte 6, an welchem diese vom Transportmittel 8, hier einem Chargierkran, aufzunehmen sind. FIG 2 zeigt eine Seitenansicht, FIG 3 eine Draufsicht in Richtung des Pfeils II auf die Situation.

Die Objekte 4a-c sind hier auf nicht näher erläuterten schienengeführten Transport- oder Schrottfähren gelagert, welche an jeweilige Anschlagpuffer 10 anfahren werden. Die Objekte 4a-c gelangen so in zumindest ungefähr definierten Toleranzlagen Ta-c, d.h. mit hinreichender Toleranz in sogenannten Übergabepositionen zur Ruhe. Diese unterscheiden sich jedoch in der Regel von den ideal einzunehmenden Soll-Lagen Sa-c.

Im Beispiel befinden sich die Objekte 4a-c in x-Richtung und in y-Richtung mit einer Genauigkeit von ±6 cm sowie in z-Richtung mit einer Abweichung von 0 bis +15 cm in den Soll-Lagen Sa-c. Insbesondere ist die Toleranz in z-Richtung begründet durch etwaigen Schmutz und Schrottstücke zwischen den Schrottkörben und der Abstellfläche der Fähre. Auch sind die Objekte 4a-c daher u.U. leicht um einen Toleranzwinkel α von einigen Grad um die z-Achse verdreht. Die Toleranzen in x-und y-Richtung rühren von den Puffern 10 und der Schienenführung sowie von der Position bzw. Auflage des Objekts 4a-c auf der Schrottfähre her. Erfindungsgemäß wird an jedem Objekt 4a-c eine Kennmarke 14a-c angebracht. Deren jeweilige Relativpositionen R_{a-c} zum zugehörigen Objekt 4a-c bzw. den Aufnahmepunkten 6 sind bekannt.

Die Anlage 2 enthält außerdem die Ortungsvorrichtung 16 zur Ermittlung der jeweiligen Raumlagen L_{a-c} der Kennmarken 14a-c im Anlagenkoordinatensystem 12 mit Hilfe der Recheneinrichtung 18, hier in Form einer SPS. Die Recheneinrichtung 18 ermittelt dann aus den jeweiligen Raumlagen L_{a-c} und den bekannten Relativpositionen R_{a-c} die jeweiligen Toleranzlagen T_{a-c} der Aufnahmepunkte 6 im Anlagenkoordinatensystem 12.

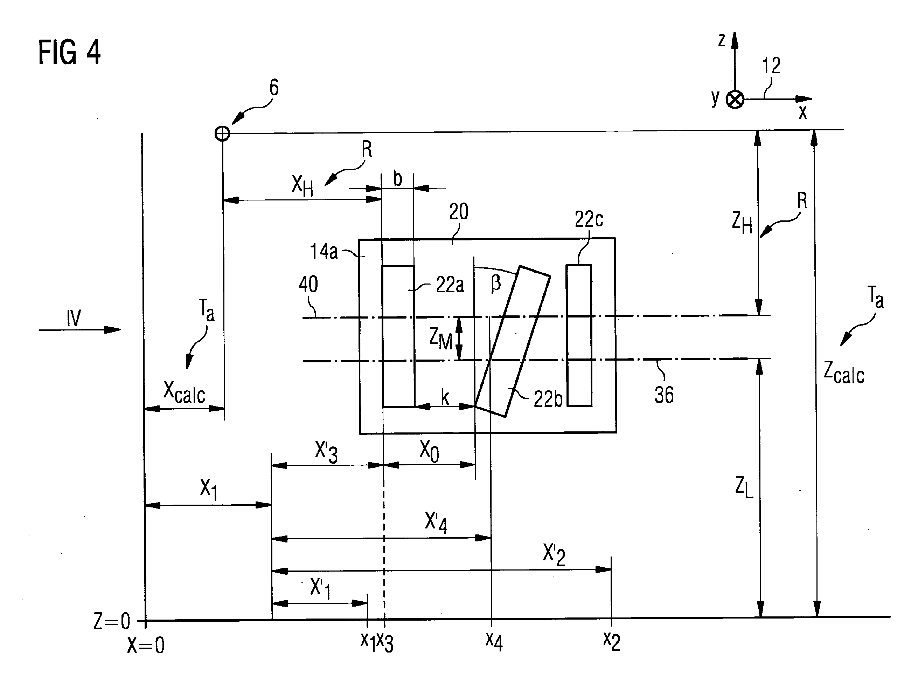

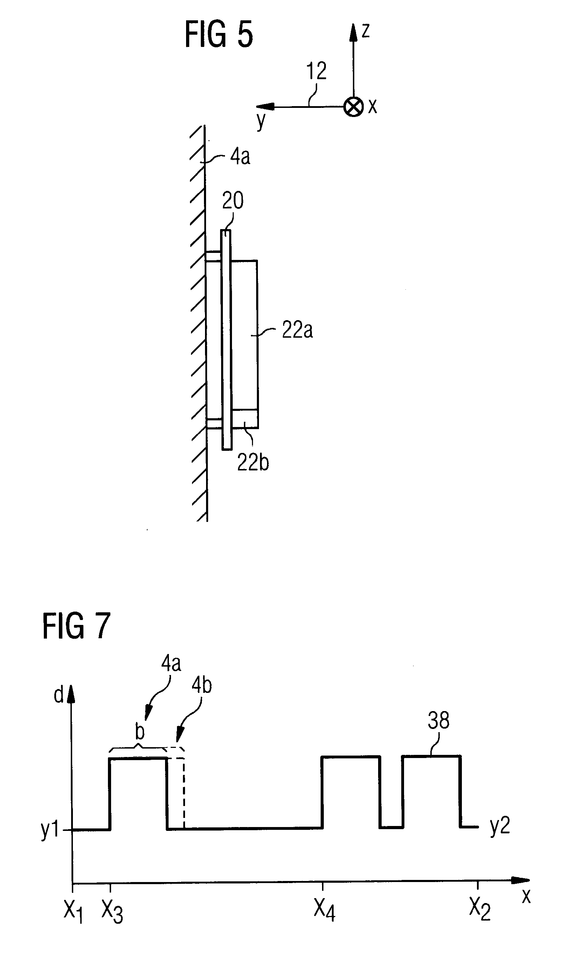

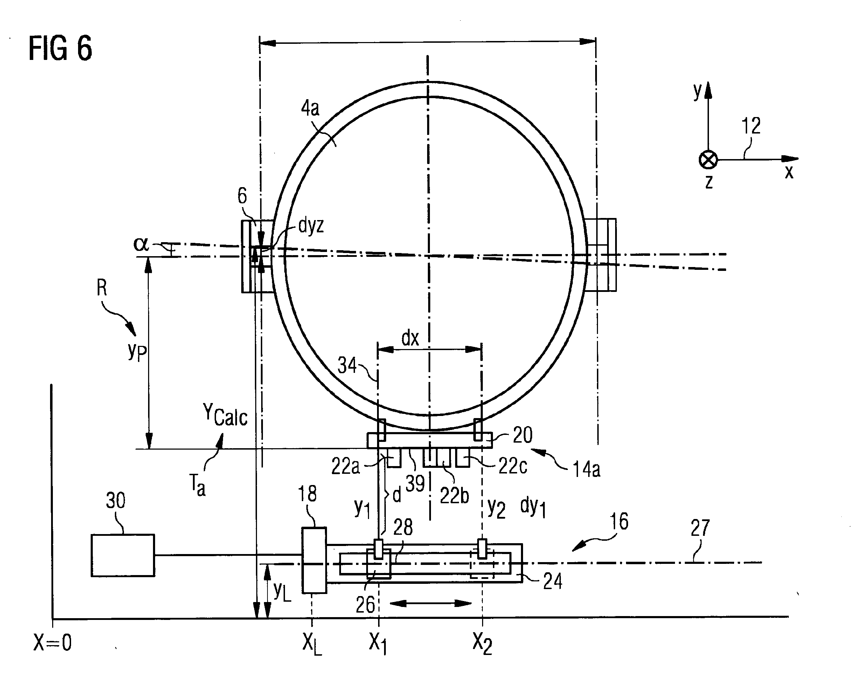

FIG 4 zeigt die Kennmarke 14a im Detail in Seitenansicht in Richtung der y-Achse. FIG 5 zeigt die Seitenansicht der Kennmarke 14a in Richtung des Pfeils IV, also in x-Richtung, und wie diese am Objekt 4a befestigt ist. FIG 6 zeigt in einer Ansicht gemäß FIG 2 in z-Richtung das Objekt 4a mit der Kennmarke 14a und die Ortungsvorrichtung 16 im Detail.

Die Kennmarke 14a weist im Beispiel eine eiserne, hier eine ebene Grundfläche 20 bildende Grundplatte mit aufmontierten parallel erhabenen Strukturelementen 22a-c in Form von Stegen auf, die aus der Grundfläche 20 hervortreten und entsprechende senkrecht zur Grundfläche 20 stehende Seitenkanten bilden.

Die Ortungsvorrichtung 16 weist ein sich in X-Richtung erstreckendes Grundgerüst 24 auf, auf dem eine Erfassungseinheit 26 in X-Richtung entlang einer Geraden 27 bewegbar ist. Die Erfassungseinheit 26 ist im Beispiel ein Laserdistanzmessgerät. Die Bewegung der Erfassungseinheit 26 wird durch einen Linearantrieb 28 bewerkstelligt. Die gesamte Ortungsvorrichtung 16 wird über eine Steuerungseinheit 30 und die Recheneinrichtung 18, symbolisch als Teil der Anlagensteuerung (SPS) dargestellt, bedient.

Die Ortungsvorrichtung 16 bzw. die Erfassungseinheit 26 ermittelt hierbei stets einen Abstand d zwischen sich und einem Gegenpunkt, der in FIG 5 stets an der Kennmarke 14a, entlang wandert. Die Abstandsmessung erfolgt entlang einer Richtung 34, die stets senkrecht zur Geraden 27, also der Bewegungsrichtung hier also in Y-Richtung verläuft.

Sobald die betreffende Schrottfähre zusammen mit dem von ihr getragenen Objekt 4a in FIG 1 bzw. 2 ihre Toleranzlage Tₐ ruhend einnimmt, beginnt die Ortungsvorrichtung 16 mit ihrer Messung von Abständen d durch die Erfassungseinheit 26. Aus der ausgezogen gezeichneten Position x1 in FIG 6 wird die Erfassungseinheit 26 hierbei in Richtung der positiven X-Achse bis zur gestrichelt gezeichneten Position x2 bewegt.

Die hierbei zurückgelegte Wegstrecke ist dₓ=X₂-X₁. Die entsprechenden X-Positionen beziehen sich hierbei auf die X=0-Null-Lage des Anlagenkoordinatensystems 12. Bekannt ist die Lage des ortsfesten Grundgerüstes 24 als xL. Die Größen x1 und x2 ergeben sich als Offsets x1' und x2' der Erfassungseinheit 26 zum Grundgerüst 24, addiert zu xL.

Ein Messpunkt der Abstandsmessung überstreicht hierbei entlang einer Messlinie 36 die Kennmarke 14a. FIG 7 zeigt den über der x-Koordinate aufgetragenen Verlauf der gemessenen Abstände d, nämlich ein gemessenes Höhenprofil 38. Das Höhenprofil 38 ist hierbei durch Filterung nach der Messung bereinigt. Das Höhenprofil 38 bildet den mit der Abstandsmessung erfassten Konturverlauf 39 der Kennmarke 4a ab. Durch Auswertung des Höhenprofils 38 ermittelt die Steuerungseinheit 30 die Toleranzlage Ta - hier eine x,y,z-Raumlage sowie einen Verdrehwinkel α um die z-Achse - der Kennmarke 14a bzw. des Objekts 4a. Über die bekannte Relativposition Rₐ zur Kennmarke 14a bzw. dem Objekt 4a dann schließlich die tatsächliche Toleranzlage Tₐ der Aufnahmepunkte 6 des Objekts 4a, auch hier wieder deren x,y,z-Raumlage und den Verdrehwinkel α um die z-Achse.

Im Detail ist außerdem die y-Lage YL der Geraden 27 und damit der Erfassungseinheit 26 und der Messlinie 36 als Abstand zum Nullpunkt Y=0 bekannt. Aus den gemessenen Abständen d an den X-Koordinaten X₁ und X₂ ergeben sich die jeweiligen tatsächlichen Y-Koordinaten Y₁ und Y₂ der Grundfläche 20 durch Addition der Abstände d und der Größe YL am Ort der Messlinie 36. Da im vorliegenden Fall des Objekt 4a um einen Winkel α verdreht ist, ergibt sich eine Differenz dY1=Y₁-Y₂. Über die bekannten Dimensionen des Objekts 4a (Durchmesser, Lage der Aufnahmepunkte 6) in der Anlage 2 kann so der Winkel α, sowie die daraus resultierenden Abweichungen der x-y-Koordinaten der Aufnahmepunkte 6 in der Toleranzlage Tₐ berechnet werden. Beispielsweise ist hierbei der konstante Y-Abstand Y_{P} zwischen der Kennmarke 14a und dem Aufnahmepunkt 6 als Teil der bekannten Relativlage R bekannt. Aus den inzwischen ermittelten Größen und den bekannten Dimensionen des Objekts 4a lässt sich so die tatsächliche Position Y_{calc} des Aufnahmepunkte 6 ermitteln, die somit einen Teil der Toleranzlage Tₐ bildet. In die Berechnung von Y_{calc} fließt z.B. noch die Abweichung d_{Y2} ein, die sich aus dem Winkel α bzw. aus d_{Y1} und dem Strahlensatz ergibt.

Im gemessenen Höhenprofil 38 ergeben sich die Werte X₃ und X₄ - die Ort der Abstandssprünge - als die jeweiligen Nullkoordinaten X_{L} der Ortungseinrichtung 16 zusammen mit den jeweiligen aktuellen Offsets X'₃ und X'₄ der Erfassungseinheit 26 zum Nullpunkt X_{L}. Der Sprung im Höhenprofil 38 am Ort X₃ wird durch das Strukturelement 22a verursacht. Dessen Lage X_{H} ist als Teil der Relativposition Rₐ zum Aufnahmepunkt 6 (in FIG 3 nur symbolisch dargestellt) wieder bekannt. So ist die x-Lage X_{calc} der Toleranzlage Tₐ berechenbar.

Befände sich das Objekt 4a in seiner Soll-Lage Sₐ, würde der Laserpunkt der Erfassungseinheit 26 die Kennmarke 14a auf Höhe der Nullebene 40 überstreichen, sich also dort eine Messlinie 36 ergeben. Aufgrund des tatsächlichen Höhenversatzes des Objekts 4a in +Z-Richtung hingegen überstreicht der Laserpunkt die Kennmarke 14a auf Höhe der tatsächlichen Messlinie 36. Da das Strukturelement 22b um einen Winkel β gegenüber dem Strukturelement 22a um die Y-Achse verkippt ist, kann aus dem tatsächlichen Abstand bzw. X4-X3 und dem Winkel β der Höhenversatz Z_{M} der Messlinie 36 zur Nullebene 40 ermittelt werden. Die entsprechenden Winkelberechnungen lassen sich aus dem bekannten Abstand K der beiden Strukturelemente 22a und 22b und dem Öffnungswinkel β berechnen.

Der Stegabstand zwischen den Strukturelementen 22a,b ist wegen deren Verkippung also abhängig von der z-Komponente der Toleranzlage Tₐ. Dieser Bereich der Kennmarke bildet daher einen in Bezug auf verschiedene Toleranzlagen Tₐ in Richtung des zu messenden Abstandes d unterschiedlichen Konturverlauf. Zusammen mit der wiederum bekannten Relativlage Z_{H} zwischen der Nullebene 40 und dem Aufnahmepunkt 6 als Teil der bekannten Relativlage Ra und der bekannten Höhenlage Z_{L} des Laserstrahls der Erfassungseinheit 26 im Koordinatensystem 12 kann so auch die Z-Lage Z_{caic} der Toleranzlage Tₐ ermittelt werden.

Die Stegbreite b kann hierbei zwischen verschiedenen Objekten 4a,b variieren (in FIG 7 angedeutet), um diese anhand des gemessenen Wertes b im Höhenprofil 38 voneinander zu unterscheiden. Alternativ oder zusätzlich kann eine Unterscheidung der Objekte 4a,b anhand weiterer zusätzlicher Stege, wie z.B. des Strukturelementes 22c oder dessen Weglassung unterschieden werden.

Die Stegbreite b oder der Abstand zwischen den parallelen Strukturelementen 22a,c ist weitestgehend unabhängig von allen Ausrichtungen der Kennmarke 14a in zulässigen Toleranzlagen Tₐ unabhängig ist. Dieser Bereich der Kennmarke bildet daher einen in Bezug auf verschiedene Toleranzlagen Tₐ in Richtung des zu messenden Abstandes d konstanten Konturverlauf und kann so zur toleranzlagenunabhängigen Detektion des Objekttyps dienen.

Dass überhaupt eine Schrottfähre anwesend ist, kann z.B. ebenfalls am Höhenprofil 38 erkannt werden. Wenn die sonstige Struktur der Schrottfähre im relevanten Bereich, der von der Ortungsvorrichtung 16 durch Abstandsmessungen erfassbar ist, keine ebenen Flächen in der Größe der Kennmarken 14a-c aufweist. Nur bei Vorhandensein einer Fähre bzw. Kennmarke ergibt sich dann überhaupt ein Höhenprofil mit etwa ebener, die Grundfläche 20 abbildender Grundlinie und eingestreuten Höhensprüngen.

## Patentansprüche

1. Verfahren zur Ermittlung einer von einer Soll-Lage (S_{a-c}) abweichenden Toleranzlage (T_{a-c}) eines Aufnahmepunktes (6) eines in einer Anlage (2) ruhenden, von einem Transportmittel (8) aufzunehmenden Objektes (4a-c), bei dem:
- am Objekt (4a-c) eine Kennmarke (14a-c) in einer bekannten Relativposition (R_{a-c}) zum Aufnahmepunkt (6) angebracht wird,
- eine Recheneinrichtung (18) anhand einer in der Anlage (2) angeordneten Ortungsvorrichtung (16) eine Raumlage (L_{a-c}) der Kennmarke (14a-c) in der Anlage (2) ermittelt,
- die Recheneinrichtung (18) die Toleranzlage (T_{a-c}) aus der Raumlage (L_{a-c}) und der Relativposition (R) ermittelt,
**dadurch gekennzeichnet, dass**
- die Ortungsvorrichtung (16) ein Höhenprofil (38) durch eindimensionale Messungen des Abstandes (d) zwischen sich und der Kennmarke (14a-c) ermittelt,
- die Kennmarke (14a-c) einen, bei in der Soll-Lage (Sa-c) ruhendem Objekt (4a-c) in Richtung (34) des zu messenden Abstandes (d) ausgerichteten Konturverlauf (39) aufweist, und
- die Recheneinrichtung (18) die Raumlage (L_{a-c}) anhand des Höhenprofils (38) ermittelt.

2. Verfahren nach Anspruch 1,
bei dem eine in der Ortungsvorrichtung (16) enthaltene, den Abstand (d) messende Erfassungseinheit (26) relativ zum ruhenden Objekt (4a-c) bewegt wird.

3. Verfahren nach Anspruch 2,
bei dem die Erfassungseinheit (26) entlang einer Geraden (27) bewegt wird.

4. Verfahren nach Anspruch 3,
bei dem eine, eine ebene Grundfläche (20) aufweisende Kennmarke (14a-c) so am Objekt angebracht wird, dass bei in der Soll-Lage (S_{a-c}) ruhendem Objekt (4a-c) die Grundfläche (20) parallel zur Geraden (27) ausgerichtet ist.

5. Verfahren nach Anspruch 3 oder 4,
bei dem der Abstand (d) entlang einer zur Geraden (27) senkrechten Richtung (34) gemessen wird.

6. Vorrichtung zur Ermittlung einer von einer Soll-Lage (S_{a-c}) abweichenden Toleranzlage (T_{a-c}) eines Aufnahmepunktes (6) eines in einer Anlage (2) ruhenden, von einem Transportmittel (8) aufzunehmenden Objektes (4a-c), mit:
- einer am Objekt (4a-c) in einer bekannten Relativposition (R) zum Aufnahmepunkt (6) anbringbaren Kennmarke (14a-c),
- einer anhand einer in der Anlage (2) angeordneten Ortungsvorrichtung (16) eine Raumlage (L_{a-c}) der Kennmarke (14a-c) in der Anlage (2) ermittelnden und die Toleranzlage (T_{a-c}) aus der Raumlage (L_{a-c}) und der Relativposition (R) ermittelnden Recheneinrichtung (18),
**dadurch gekennzeichnet, dass**
- die Ortungsvorrichtung (16) ein einen Abstand (d) zwischen sich und der Kennmarke (14a-c) eindimensional ermittelndes Distanzmessgerät als zumindest Teil der Erfassungseinheit (26) enthält,
- die Ortungsvorrichtung (16) geeignet ist, ein Höhenprofil (38) durch eindimensionale Messungen des Abstandes (d) zwischen sich und der Kennmarke (14a-c) zu ermitteln,
- die Kennmarke (14a-c) einen, bei in der Soll-Lage (Sa-c) ruhendem Objekt (4a-c) in Richtung (34) des zu messenden Abstandes (d) ausgerichteten Konturverlauf (39) aufweist, und
- die Recheneinrichtung (18) geeignet ist, die Raumlage (La-c) anhand des Höhenprofils (38) zu ermitteln.

7. Vorrichtung nach Anspruch 6,
bei der der Konturverlauf (39) durch eine Grundfläche (20) und mindestens ein zu dieser konturiertes Strukturelement (22a-c) gebildet ist.

8. Vorrichtung nach einem der Ansprüche 6 bis 7,
bei der zumindest ein Bereich der Kennmarke (14a-c) einen in Bezug auf verschiedene Toleranzlagen (T_{a-c}) in Richtung des zu messenden Abstandes (d) konstanten Konturverlauf (39) aufweist.

9. Vorrichtung nach einem der Ansprüche 6 bis 8,
bei der zumindest ein Bereich der Kennmarke (14a-c) einen in Bezug auf verschiedene Toleranzlagen (T_{a-c}) in Richtung des zu messenden Abstandes (d) unterschiedlichen Konturverlauf (39) aufweist.

10. Vorrichtung nach einem der Ansprüche 6 bis 9,
bei der die Recheneinrichtung (18) eine speicherprogrammierbare Steuerung ist.

## Claims

1. Method for determining a tolerance location (T_{a-c}), which differs from a desired location (S_{a-c}), of a pick-up point (6) of an object (4a-c) that is stationary in a plant (2) and is to be picked up by a transport means (8), wherein:
- an identification mark (14a-c) is attached to the object (4a-c) in a known relative position (R_{a-c}) to the pick-up point (6),
- a computing device (18) determines a physical location (L_{a-c}) of the identification mark (14a-c) in the plant (2) with the aid of a locating apparatus (16) which is arranged in the plant (2),
- the computing device (18) determines the tolerance location (T_{a-c}) from the physical location (L_{a-c}) and the relative position (R),
**characterised in that**
- the locating apparatus (16) determines a height profile (38) by means of one-dimensional measurements of the distance (d) between itself and the identification mark (14a-c),
- when an object (4a-c) is stationary in the desired location (Sa-c), the identification mark (14a-c) has a contour outline (39) which is oriented in the direction (34) of the distance (d) to be measured, and
- the computing device (18) determines the physical location (La-c) on the basis of the height profile (38).

2. Method according to claim 1,
wherein a detection unit (26) which is contained in the locating apparatus (16) and measures the distance (d) is moved relative to the stationary object (4a-c).

3. Method according to claim 2,
wherein the detection unit (26) is moved along a straight line (27) .

4. Method according to claim 3,
wherein an identification mark (14a-c) having a flat base surface (20) is attached to the object in such a way that, when an object (4a-c) is stationary in the desired location (S_{a-c}), the base surface (20) is oriented parallel to the straight line (27).

5. Method according to claim 3 or 4,
wherein the distance (d) is measured along a direction (34) which is perpendicular to the straight line (27).

6. Apparatus for determining a tolerance location (T_{a-c}), which differs from a desired location (S_{a-c}), of a pick-up point (6) of an object (4a-c) that is stationary in a plant (2) and is to be picked up by a transport means (8), comprising:
- an identification mark (14a-c) which can be attached to the object (4a-c) in a known relative position (R) to the pick-up point (6),
- a computing device (18) which determines a physical location (L_{a-c}) of the identification mark (14a-c) in the plant (2) with the aid of a locating apparatus (16) that is arranged in the plant (2), and which determines the tolerance location (T_{a-c}) from the physical location (L_{a-c}) and the relative position (R),
**characterised in that**
- the locating apparatus (16) contains a distance measuring device which constitutes at least part of the detection unit (26) and determines a distance (d) in one dimension between itself and the identification mark (14a-c),
- the locating apparatus (16) is suitable for determining a height profile (38) by means of one-dimensional measurements of the distance (d) between itself and the identification mark (14a-c) ,
- when an object (4a-c) is stationary in the desired location (Sa-c), the identification mark (14a-c) has a contour outline (39) which is oriented in the direction (34) of the distance (d) to be measured, and
- the computing device (18) is suitable for determining the physical location (La-c) on the basis of the height profile (38) .

7. Apparatus according to claim 6,
wherein the contour outline (39) is formed by a base surface (20) and at least one structural element (22a-c) whose contour is appended thereto.

8. Apparatus according to one of claims 6 to 7,
wherein at least one region of the identification mark (14a-c) has, in relation to various tolerance locations (T_{a-c}), a constant contour outline (39) in the direction of the distance (d) to be measured.

9. Apparatus according to one of claims 6 to 8,
wherein at least one region of the identification mark (14a-c) has, in relation to various tolerance locations (T_{a-c}), a different contour outline (39) in the direction of the distance (d) to be measured.

10. Apparatus according to one of claims 6 to 9,
wherein the computing device (18) is a stored programmable control.

## Revendications

1. Procédé de détermination d'une position ( T_{a-c} ) de tolérance, s'écartant d'une position ( S_{a-c} ) de consigne, d'un point ( 6 ) de réception d'un objet ( 4_{a-c} ) au repos dans une installation ( 2 ) et à recevoir par un moyen ( 8 ) de transport, dans lequel :
- on appose sur l'objet ( 4_{a-c} ) une marque ( 14_{a-c} ) d'identité en une position ( R_{a-c} ) relative connue par rapport au point ( 6 ) de réception,
- un dispositif ( 18 ) informatique détermine, au moyen d'un dispositif ( 16 ) de localisation disposé dans l'installation ( 2 ) , une position ( L_{a-c} ) dans l'espace de la marque ( 14_{a-c} ) d'identité dans l'installation ( 2 ),
- le dispositif ( 18 ) informatique détermine la position ( T_{a-c} ) de tolérance à partir de la position ( L_{a-c} ) dans l'espace et de la position ( R ) relative,
**caractérisé en ce que**,
- le dispositif ( 16 ) de localisation détermine un profil ( 18 ) en hauteur par des mesures unidimensionnelles de la distance ( d ) entre lui et la marque ( 14_{a-c} ) d'identité,
- la marque ( 14_{a-c} ) d'identité a, pour l'objet ( 4_{a-c} ) au repos dans la position ( 5_{a-c} ) de consigne, un tracé ( 39 ) de contour dirigé dans la direction ( 34 ) de la distance ( d ) à mesurer et
- le dispositif ( 18 ) informatique détermine la position ( L_{a-c} ) dans l'espace au moyen du profil ( 38 ) en hauteur.

2. Procédé suivant la revendication 1, dans lequel on déplace par rapport à l'objet ( 4_{a-c} ) au repos, une unité ( 26 ) de détection contenue dans le dispositif ( 16 ) de localisation et mesurant la distance ( d ).

3. Procédé suivant la revendication 2, dans lequel on déplace l'unité ( 26 ) de détection le long d'une droite ( 27 ).

4. Procédé suivant la revendication 3, dans lequel on met une marque ( 14_{a-c} ) d'identité ayant une surface ( 20 ) de base plane sur l'objet de manière à ce que, lorsque l'objet ( 4_{a-c} ) est au repos dans la position ( S_{a-c} ) de consigne, la surface ( 20 ) de base soit parallèle à la droite ( 27 ).

5. Procédé suivant la revendication 3 ou 4, dans lequel on mesure la distance ( d ) suivant une direction ( 34 ) perpendiculaire à la droite ( 27 ).

6. Dispositif de détection d'une position ( T_{a-c} ) de tolérance, s'écartant d'une position ( S_{a-c} ) de consigne, d'un point ( 6 ) de réception d'un objet ( 4_{a-c} ) au repos dans une installation ( 2 ) et à recevoir par un moyen ( 8 ) de transport comprenant :
- une marque ( 14_{a-c} ) d'identité pouvant être apposée sur l'objet ( 4_{a-c} ) en une position ( R ) relative connue par rapport au point ( 6 ) à de réception,
- un dispositif ( 18 ) informatique déterminant au moyen d'un dispositif ( 16 ) de localisation disposé dans l'installation ( 2 ), une position ( L_{a-c} ) dans l'espace de la marque ( 14_{a-c} ) d'identité dans l'installation ( 2 ) et déterminant la position ( T_{a-c} ) de tolérance à partir de la position ( L_{a-c} ) dans l'espace et de la position ( R ) relative,
**caractérisé en ce que**
- le dispositif ( 16 ) de localisation comporte, comme au moins une partie du dispositif ( 26 ) de détection, un appareil de mesure de distance déterminant unidimensionnellement une distance ( d ) entre lui et la marque ( 14_{a-c} ) d'identification,
- le dispositif ( 16 ) de localisation est approprié pour déterminer un profil ( 38 ) en hauteur par des mesures monodimensionnelles de la distance ( d ) entre lui et la marque ( 14_{a-c} ) d'identité,
- la marque ( 14_{a-c} ) d'identité a un tracé ( 39 ) de contour dirigé, lorsque l'objet ( 4_{a-c} ) est au repos dans la position ( S_{a-c} ) de consigne, dans la direction ( 34 ) de l'objet ( d ) à mesurer et
- le dispositif ( 18 ) informatique est approprié pour déterminer la positon ( L_{a-c} ) dans l'espace au moyen du profil ( 38 ) en hauteur.

7. Dispositif suivant la revendication 6, dans lequel le tracé ( 39 ) du contour est formé d'une surface ( 20 ) de base et d'au moins un élément ( 22_{a-c} ) de structure, dont le contour est adapté à la surface de base.

8. Dispositif suivant l'une des revendications 6 à 7, dans lequel au moins une partie de la marque ( 14_{a-c} ) d'identification a, par rapport à diverses positions ( T_{a-c} ) de tolérance, un tracé ( 39 ) de contour constant dans la direction de la distance ( d ) à mesurer.

9. Dispositif suivant l'une des revendications 6 à 8, dans lequel au moins une partie de la marque ( 14_{a-c} ) d'identité a en relation avec diverses positions ( T_{a-c} ) de tolérance, un tracé ( 39 ) de contour différent dans la direction de la distance ( d ) à mesurer.

10. Dispositif suivant l'une des revendications 6 à 9, dans lequel le dispositif ( 18 ) informatique est un automate programmable.
